# EUROPEAN PATENT SPECIFICATION

(11) **EP 1 073 049 B1**
(45) Date of publication and mention of the grant of the patent: **06.10.2004**
(21) Application number: 00306526.5
(22) Date of filing: 31.07.2000
(51) Int. Cl.: G11B 17/04

(54) **Disk drive apparatus**
Plattenlaufwerk
Unité de disque

(30) Priority: 30.07.1999 JP 21678499; 30.07.1999 JP 21678399; 30.08.1999 JP 24335899; 25.11.1999 JP 33450399
(43) Date of publication of application: 31.01.2001
(73) Proprietor: Sanyo Electric Co., Ltd., Moriguchi-shi, Osaka-fu (JP); Tottori Sanyo Electric Co., Ltd., Tottori-shi Tottori-ken (JP)
(72) Inventor: Aoki, Shinichi, Tottori-shi, Tottori-ken (JP); Hasegawa, Yoshikazu, Tottori-shi, Tottori-ken (JP)
(74) Representative: Smith, Peter James

(56) References cited:
- EP-A- 0 661 701
- EP-A- 0 883 121
- EP-A- 0 951 017
- US-A- 5 481 512
- US-A- 5 872 757
- PATENT ABSTRACTS OF JAPAN vol. 1995, no. 07, 31 August 1995 (1995-08-31) -& JP 07 111016 A (CLARION CO LTD), 25 April 1995 (1995-04-25)
- PATENT ABSTRACTS OF JAPAN vol. 1997, no. 12, 25 December 1997 (1997-12-25) -& JP 09 212968 A (FUJITSU TEN LTD), 15 August 1997 (1997-08-15)
- PATENT ABSTRACTS OF JAPAN vol. 1998, no. 05, 30 April 1998 (1998-04-30) -& JP 10 003724 A (SONY CORP), 6 January 1998 (1998-01-06)
- PATENT ABSTRACTS OF JAPAN vol. 1998, no. 11, 30 September 1998 (1998-09-30) -& JP 10 162466 A (TANASHIN DENKI CO), 19 June 1998 (1998-06-19)

## Description

### BACKGROUND OF THE INVENTION

### FIELD OF THE INVENTION

The present invention generally relates to a disk drive apparatus, and more particularly to a 1DIN size reproducing apparatus capable of reproducing information from an 8-cm CD (Compact Disk) a 12-cm CD, and an MD (Mini Disk) cartridge (in the following referred as MD) using a single common head.

### DESCRIPTION OF CONVENTIONAL ART

Among the MD and CD reproducing apparatus on the market is one in which an MD reproducing device and a CD reproducing device each have a roller for loading and a head for reproducing recorded information. One way of miniaturizing the apparatus is a head disclosed by Japanese Patent Preliminary Publication No. 10-40512, the head serving to reproduce information either from the MD and CD. European Patent publication 0661701 also discloses a disk recording/reproducing apparatus in which a CD and an MD share a common optical pickup. In this apparatus, a CD is moved to a first position on a turntable by roller and an MD is moved to a second position on the turntable by a holder with a drive mechanism.

Such an apparatus is provided with a detector to detect the invention of the CD and which generates a signal received by a drive section, which operates a driving motor to rotate the roller.

An seperate motor is used to drive the holder of the MD cartridge.

However, a CD turntable and an MD turntable are not interchangeable. Therefore, a reproducing apparatus requires turntables specifically designed for reproducing CDs and MDs, respectively. In addition, the MD turntable and CD turntable require to be spaced apart by a predetermined minimum distance (about 73 mm) over which the common head can move between the MD and CD for reproducing information. This implies that a total width of an area occupied by the CD and MD is at least about 167 mm. However, for example, a 1DIN (German specification) audio size on-vehicle disk drive apparatus has a maximum outer width of less than 178 mm. The disk drive apparatus incorporates a roller for loading the MD and CD and associated mechanical components assembled near the roller. Therefore, the roller cannot be longer than 167mm and the CD turntable is required to move to a position directly below the loaded CD such that the CD turntable is accurately centered with respect to the CD. The need for moving the turntable has placed a strong demand on the development of a technology in which the same motor can be used both when moving the turntable and when clamping the MD and CD.

### SUMMARY OF THE INVENTION

The present invention was made in view of the aforementioned problems.

An object of the invention is to provide a disk drive apparatus in which CD and an MD are selectively loaded into a disk drive apparatus. There are provided an upper space above a roller (11) and a lower space below the roller (11). The roller (11) engages the MD and rotates to pull in the MD into the disk drive apparatus when the MD is inserted into one of the upper space and the lower space and engages the CD and rotates to pull in the CD into the disk drive apparatus when the CD is inserted into the other of the upper space and the lower space. A first detector (18+20, 19+21) detects the MD and generates a first detection signal when the MD is inserted into the apparatus. A second detector (22, 23) detects the CD and generates a second detection signal when the CD is inserted into the apparatus. A drive section (171, 172, 173) drives the roller (11) in rotation in directions according to the first detection signal and the second detection signal.

In a preferred embodiment of the invention, the roller (11) engages a disk inserted into the disk drive apparatus and is rotated to load the disk in position. The roller (11) has a first longitudinal end and a second longitudinal end. The first longitudinal end is supported such that the second longitudinal end is pivotal about the first longitudinal end. When the MD or CD is inserted into the disk drive apparatus, the roller (11) pivots such that the roller (11) is brought into pressure engagement with the MD or CD. Further scope of applicability of the present invention will become apparent from the detailed description given hereinafter. However, it should be understood that the detailed description and specific examples, while indicating preferred embodiments of the invention, are given by way of illustration only, since various changes and modifications will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limiting the present invention, and wherein:
Fig. 1 is a diagram illustrating a disk drive apparatus;
Fig. 2 is a right side view of the disk drive apparatus illustrating the insertion of a CD and an MD;
Fig. 3 is a front view of the disk drive apparatus illustrating a roller and surroundings;
Fig. 4 is a front view of the disk drive apparatus illustrating a roller and surroundings;
Fig. 5 is a left side view illustrating the insertion of a CD and an MD;
Fig. 6 is a right side view of the disk apparatus;
Fig. 7 is a partial left side view of the disk drive apparatus showing the mounting of the roller;
Fig. 8 is a front view illustrating the positional relation between the roller and the MD;
Fig. 9 is a left side view of the disk drive apparatus illustrating a drive mechanism for pulling in the CD and MD;
Fig. 10 is a top view of the disk drive apparatus just before the CD or MD is inserted into the apparatus;
Fig. 11 is a left side view of the disk drive apparatus just before the MD is inserted into the apparatus;
Fig. 12 is a top view of the disk drive apparatus when the user has inserted the MD to a position where the leading end of the MD is detected;
Fig. 13 is a top view of the disk drive apparatus when the user has inserted the MD to a position just below the roller 11;
Fig. 14 is a left side view of Fig. 13;
Fig. 15 is a partial expanded view of Fig. 14;
Fig. 16 is a top view of the disk drive apparatus when the MD has been advanced beyond a rear switch 19 from the position of Fig. 15;
Fig. 17 is a side view of Fig. 16;
Fig. 18 illustrates a pertinent portion of Fig. 17;
Fig. 19 is a top view of the disk drive apparatus when the MD has reached a loading position of MD;
Figs. 20A and 20B illustrate the positional relation among an 8-cm CD, a 12-cm CD, a first photosensor, and a second photosensor;
Fig. 21 is a side view of Fig. 19;
Fig. 22 is a side view of the disk drive apparatus when the MD is clamped;
Fig. 23 is a side view of the disk drive apparatus when the MD is pulled from the loading position of MD.
Figs. 24 and 25 are flowcharts illustrating the major operation of the control circuit 2.

### DETAILED DESCRIPTION OF THE INVENTION

The present invention will be described in detail with reference to the accompanying drawings.

### Loading mechanism

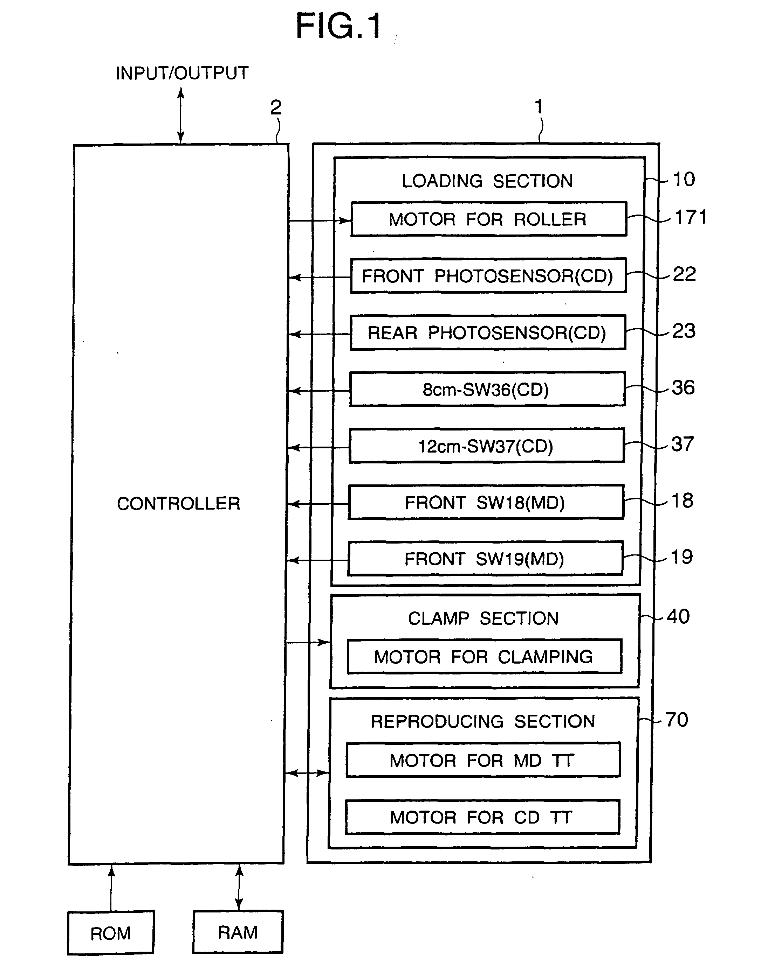

Fig. 1 is a diagram illustrating a disk drive apparatus.

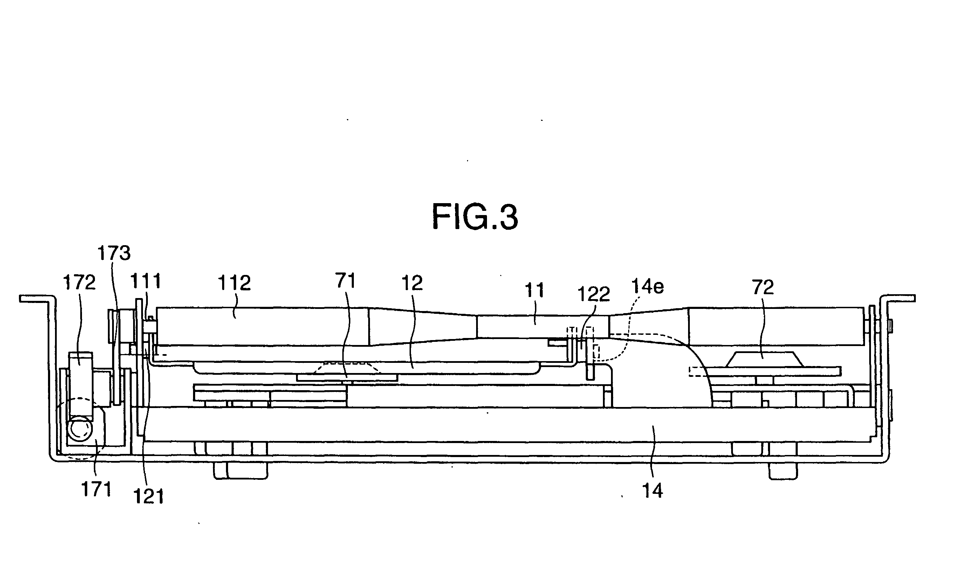

Referring to Fig. 1, a disk drive apparatus according to the invention includes the following mechanisms: a control circuit 2, a loading mechanism 10 that receives and discharges an MD and a CD, a clamping mechanism 40 that clamps the MD and CD on turntables 71 and 72 (Fig. 3), respectively, and a reproducing section 70 that reads information such as audio signals from the clamped MD and CD.

The loading mechanism 10 will be described.

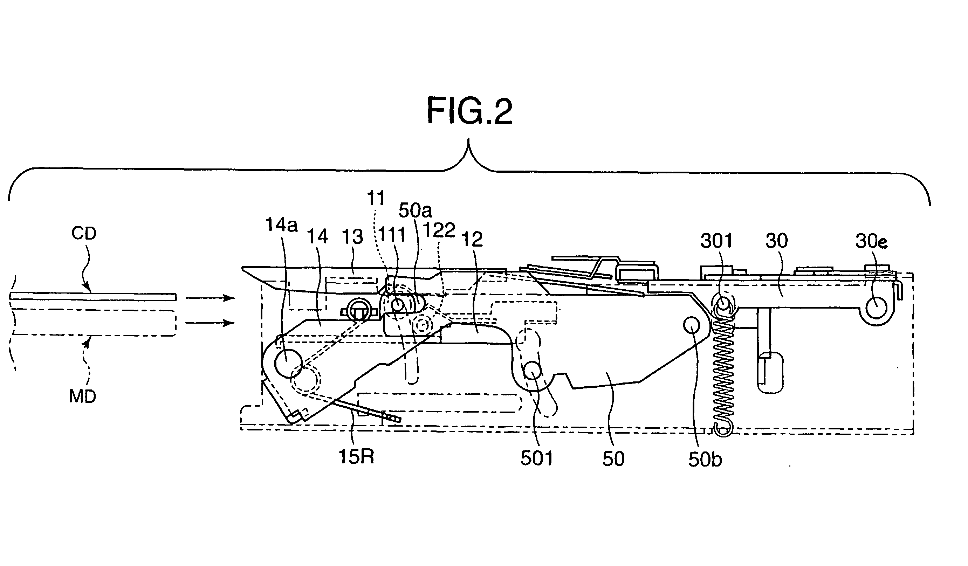

Fig. 2 is a right side view of the disk drive apparatus illustrating the insertion of a CD and an MD.

As shown in Fig. 2, an MD is inserted into a space defined by an MD tray 12 located under a roller 11 while a CD is inserted into a space defined by the roller 11 and a CD guide 13 over the roller 11. It is to be noted that the roller 11 operates both when the MD is loaded and when the CD is loaded, rotating clockwise or counterclockwise depending on whether a CD is inserted or an MD is inserted.

Fig. 3 is a front view of the disk drive apparatus illustrating a roller and surroundings.

As shown in Fig. 3, the roller 11 includes a metal shaft 111 and a rubber roll 112 formed around the shaft 111. The rubber roll 112 has a smaller diameter at its mid portion than at its longitudinal end portions. This changing diameter effectively exerts a transporting force on the peripheral portion of the CD to reliably pull in the CD, thereby facilitating insertion of a disk-shaped CD.

The MD tray 12 is aligned with the left end of the roller 11. The MD tray 12 has a left shaft 121 received in a left hole, not shown, of the roller holder 14 and a right shaft 122 received in a right hole 14e. Thus, the MD tray 12 is pivotal about the hole 14e of the roller holder 14.

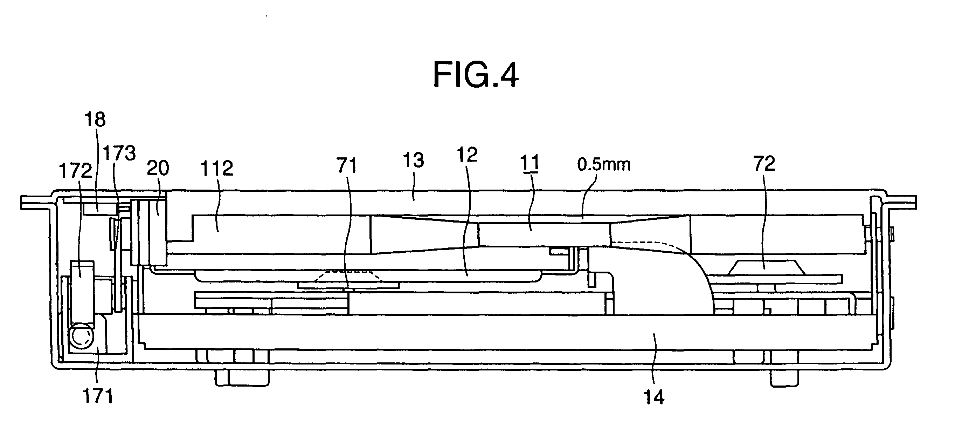

Fig. 4 is a front view of the disk drive apparatus illustrating a roller and surroundings.

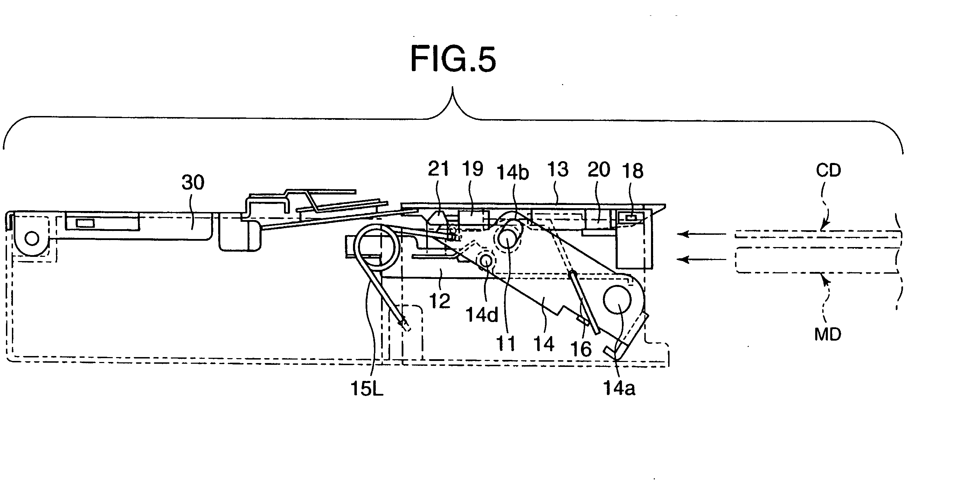

Fig. 5 is a left side view illustrating the insertion of a CD and an MD.

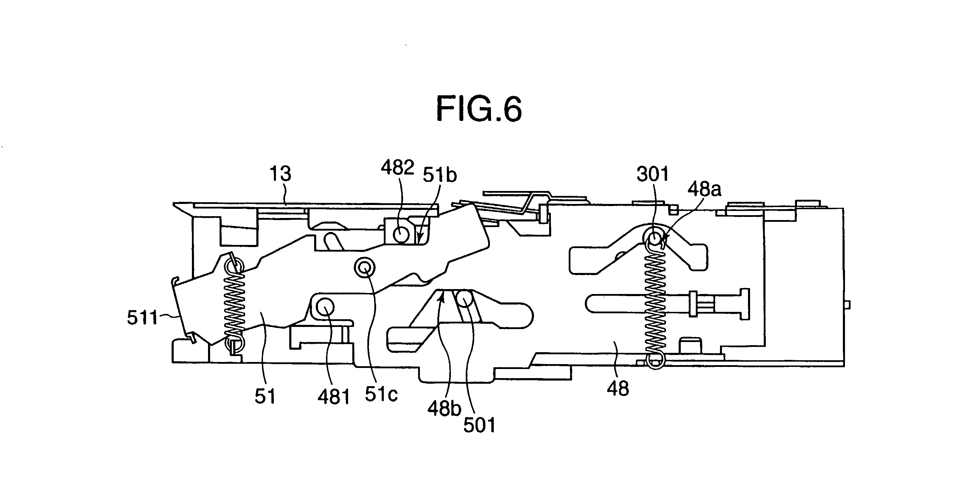

Fig. 6 is a right side view of the disk apparatus.

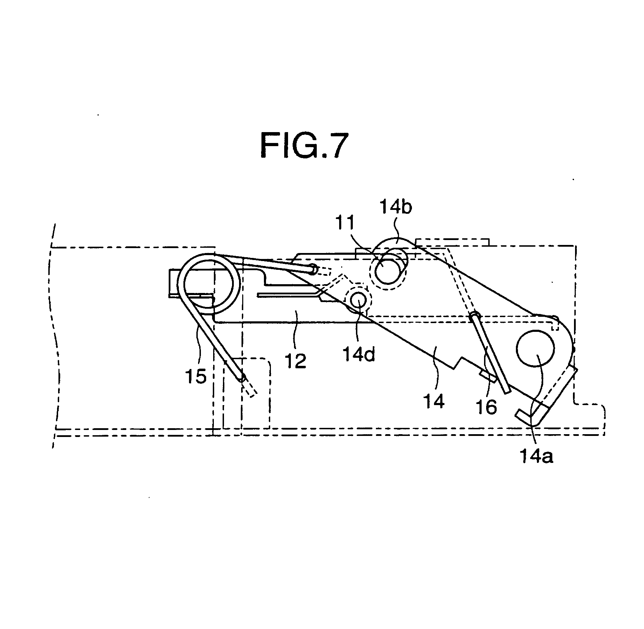

Fig. 7 is a partial left side view of the disk drive apparatus showing the mounting of the roller.

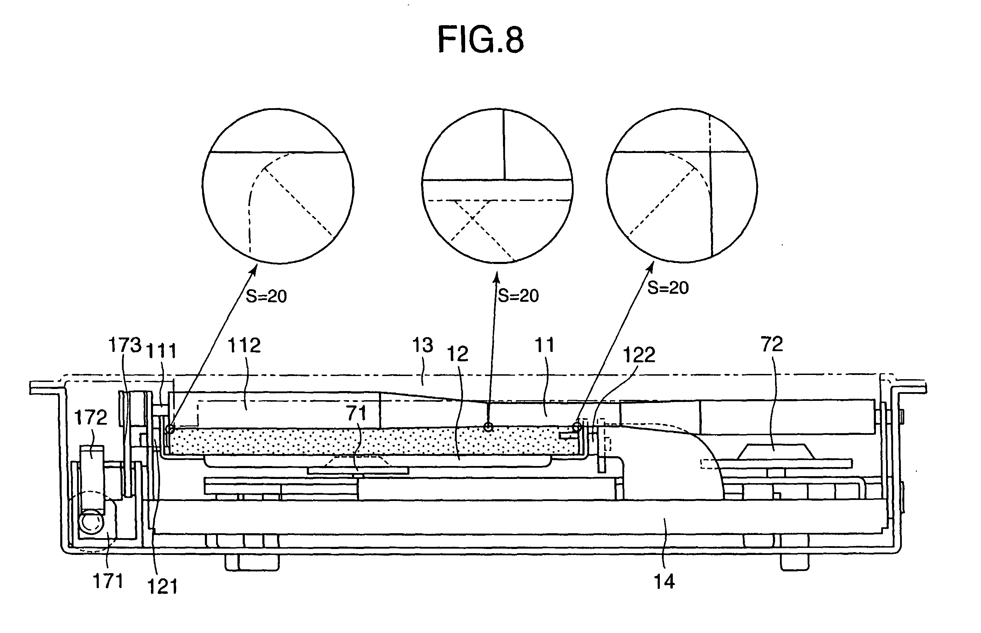

Fig. 8 is a front view illustrating the positional relation between the roller and the MD when the MD has been pulled in under the roller.

As shown in Fig. 2, the roller 11 is rotatably received at its longitudinal end portions in left and right holes formed in a roller holder 14, which in turn is pivotally received in holes 14a. Thus, when the roller holder 14 pivots about the holes 14a, the roller 11 also pivots about the holes 14a. Springs 15L (Fig. 5) and 15R (Fig. 2) engage left and right ends of the roller holder 14, respectively, to urge the roller holder 14 counterclockwise in Fig. 2 so that the roller 11 is upwardly urged.

Referring again to Fig. 2, a first link 50 is pivotally supported at holes 50b and has a cut away 50a that receives one end portion of the shaft 111 of the roller 11 therein. The first link 50 is urged clockwise by the springs 15L (Fig. 5) and 15R. The first link 50 also has a shaft 501 that abuts a second abutting edge 48b of a slide plate 48. The second abutting edge 48b prevents the clockwise pivotal movement of the first link 50, thereby maintaining the vertical position of the roller 11 that is urged upwards. The second abutting edge 48b of the slide plate 48 defines an elongated hole having a width slightly larger than the diameter of the shaft 501. Therefore, the roller 11 is slightly movable within the elongated hole against the urging forces of the springs 15L and 15R.

Referring to again to Fig. 4, before a CD is inserted, the gap between the CD guide 13 and the mid portion of the roller 11 is 0.5 mm while the gap between the CD guide 13 and the longitudinal end portions of the roller 11 is 0 mm. Thus, when a 1.2-mm thick CD is inserted into the apparatus, the roller 11 is yieldably depressed downwards by the CD, thereby allowing the CD to enter between the roller 11 and the CD guide 13.

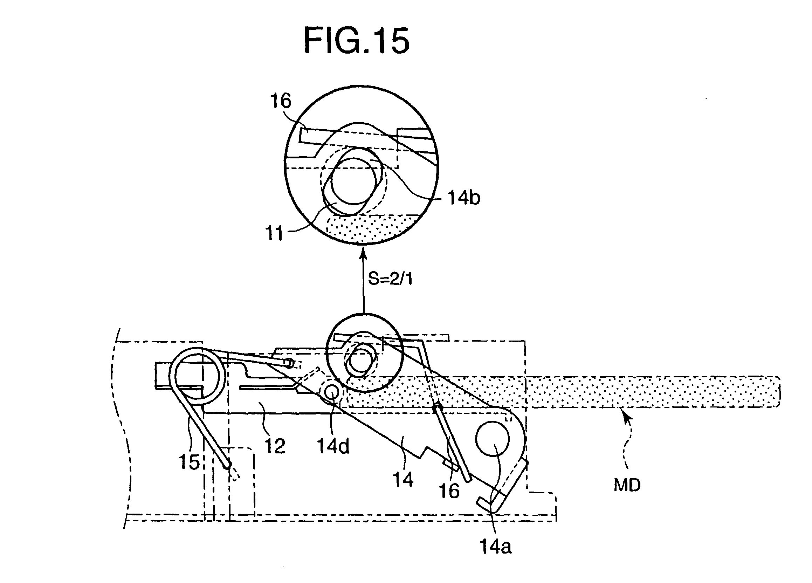

The roller holder 14 has the left and right holes formed therein that receive the shaft 111 of the roller 11 therein. The right hole is substantially circular while the left hole 14b (Fig. 7 and Fig. 15) is an elongated hole describing an arc about the hole 14a. The left end portion of the roller 11 is urged downwards by a spring 16, so that the roller 11 is pivotal about the right end of the roller 11, substantially vertically against the urging force of the spring 16. The gap between the roller 11 and the MD tray 12 is about 3.5 mm before the MD is inserted. Thus, as the MD having an actual thickness of 4.5 mm enters the MD tray 12 under the roller 11, the MD pushes the left end portion of the roller 11 upwards out of the way. Thus, as shown in Fig. 8, the roller 11 is inclined with respect to the MD such that the roller 11 is brought into contact engagement with the MD substantially across the entire width of the MD. Thus, the roller 11 can apply a transporting force on the left and right ends of the MD, ensuring that the MD is pulled into the apparatus.

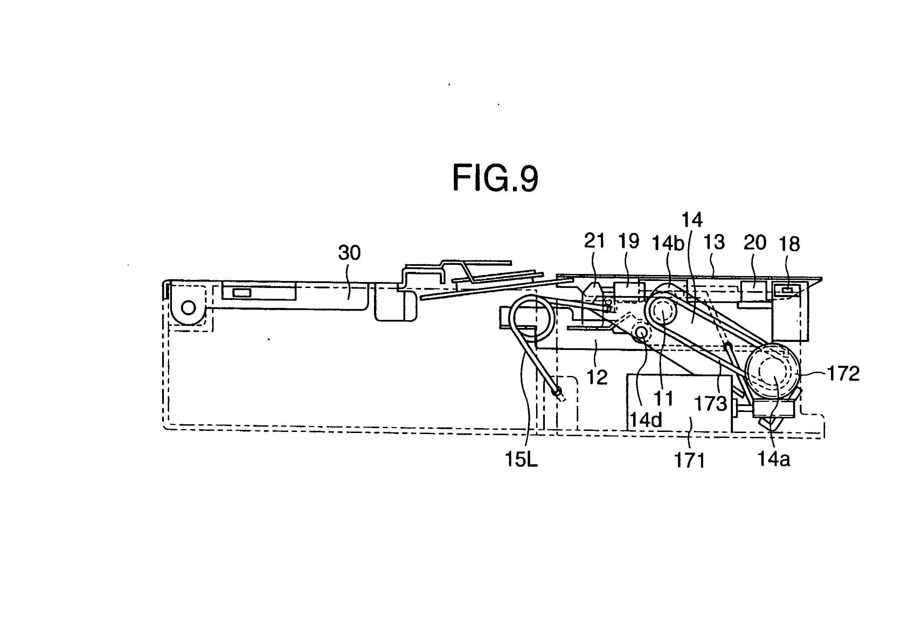

Fig. 9 is a left side view of the disk drive apparatus illustrating a drive mechanism for pulling in the CD and MD.

As shown in Fig. 9, a drive mechanism of the roller 11 includes a motor 171, a gear 172 that transmits the rotation of the motor 171 and a belt 173 that transmits the rotation of the gear 172 to the roller 11. The drive mechanism drives the roller 11 to rotate clockwise or counterclockwise, depending on whether a CD is loaded or an MD is loaded. The roller 11 rotates counterclockwise as seen from the left side of the apparatus when the CD is pulled in, and clockwise when the MD is pulled in. The gear 172 is concentric to the hole 14a formed in the roller holder 14 about which the roller 11 pivots. This is advantageous in that when the roller 11 pivots, the tension of the belt 173 remains unchanged. Therefore, the rotation of the gear 172 can reliably be transmitted to the roller.

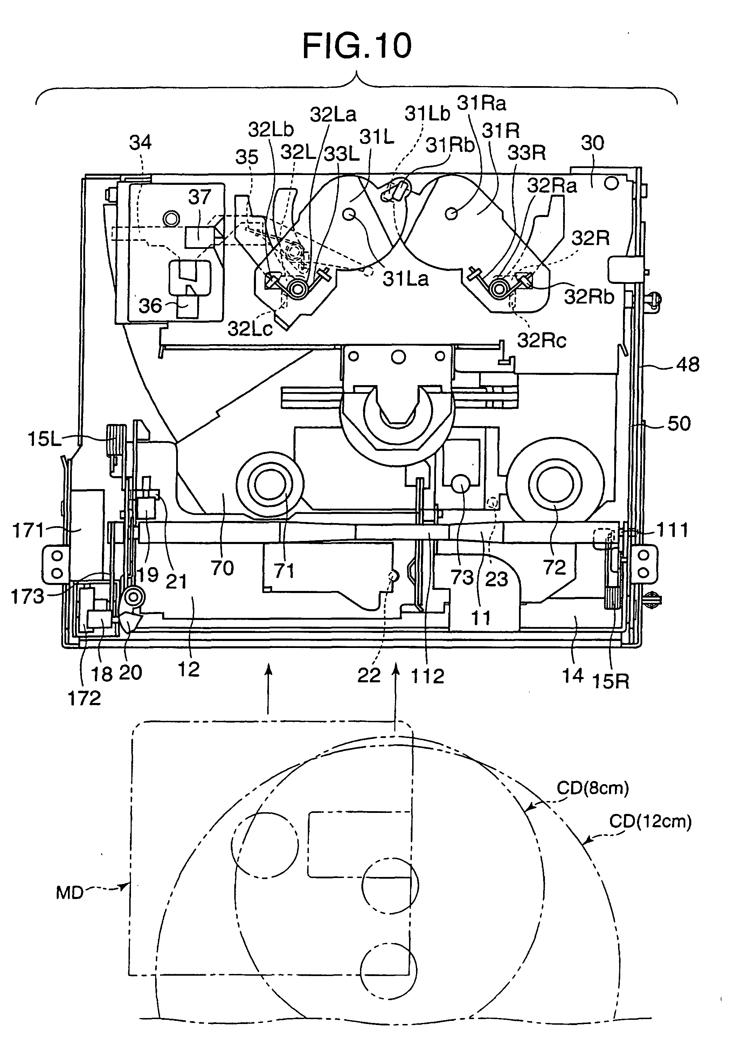

Fig. 10 is a top view of the disk drive apparatus just before the CD or MD is inserted into the apparatus.

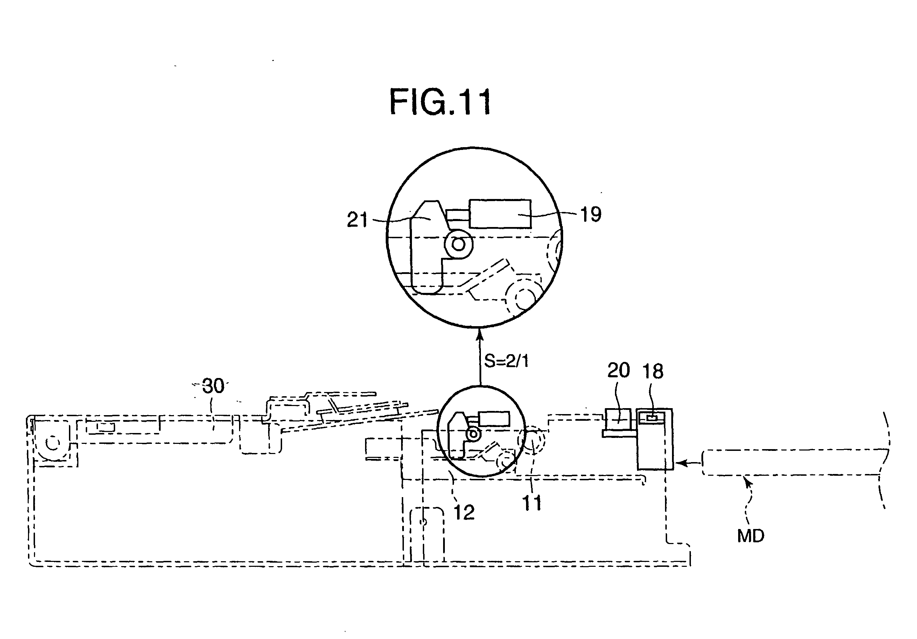

Fig. 11 is a side view of the disk drive apparatus just before the MD is inserted into the apparatus, showing front and rear switches.

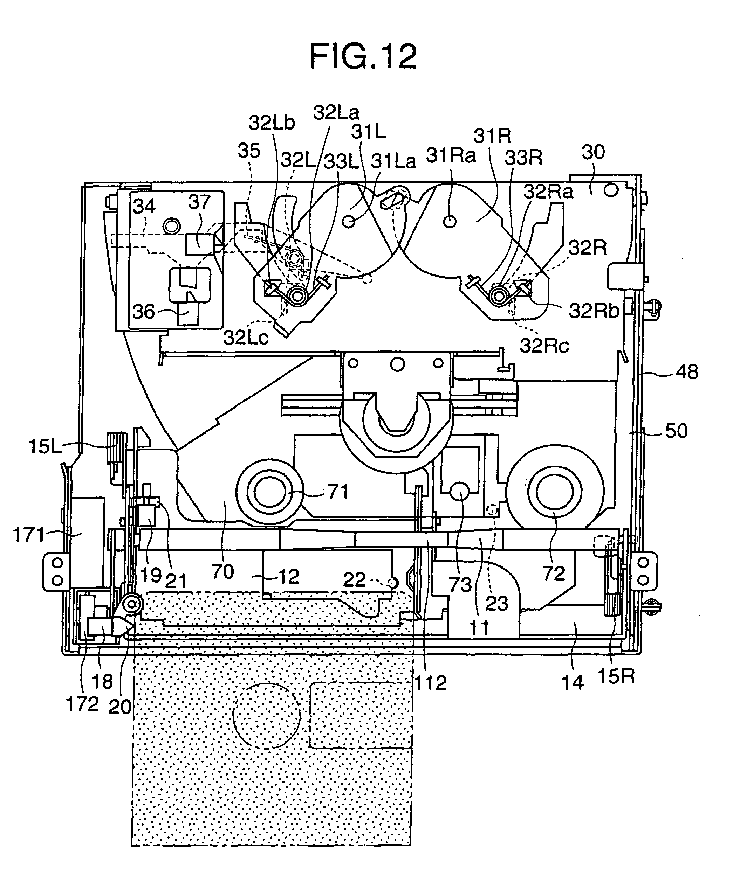

Fig. 12 is a top view of the disk drive apparatus when the user has inserted the MD to a position where the leading end of the MD is detected.

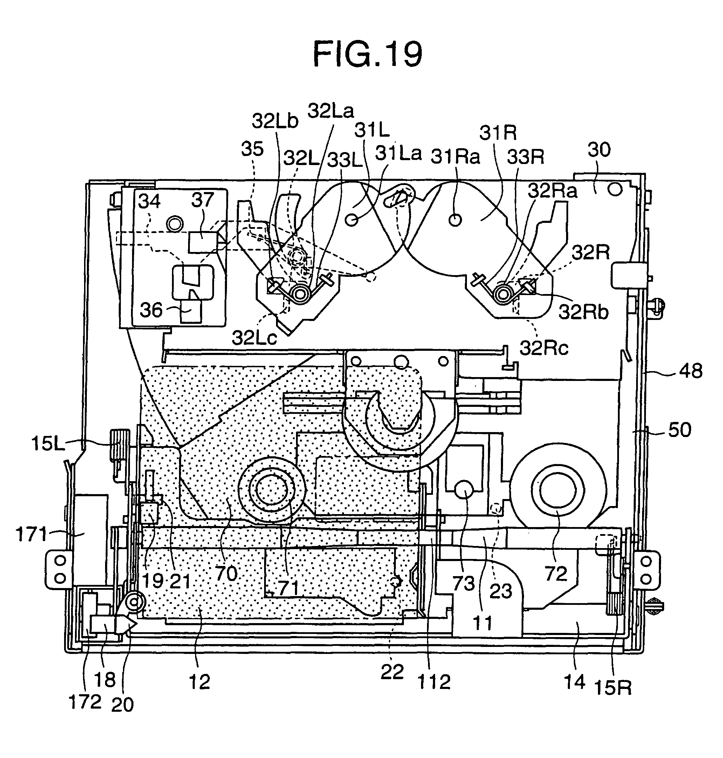

Referring to Figs. 10 and 11, a front switch 18 is located at a left side of an entrance of the MD tray 12. When the user inserts an MD into the MD tray 12, the MD pushes a lever 20 to shift the front switch 18 from the OFF position to the ON position so that the front switch 18 provides a detection signal to the control circuit 2 (Fig. 12). The front switch 18 becomes ON before the MD reaches the roller 11 and remains ON until the MD reaches its loading position (Fig. 19), i.e., when the center of the MD is aligned with the center of the MD turntable 71.

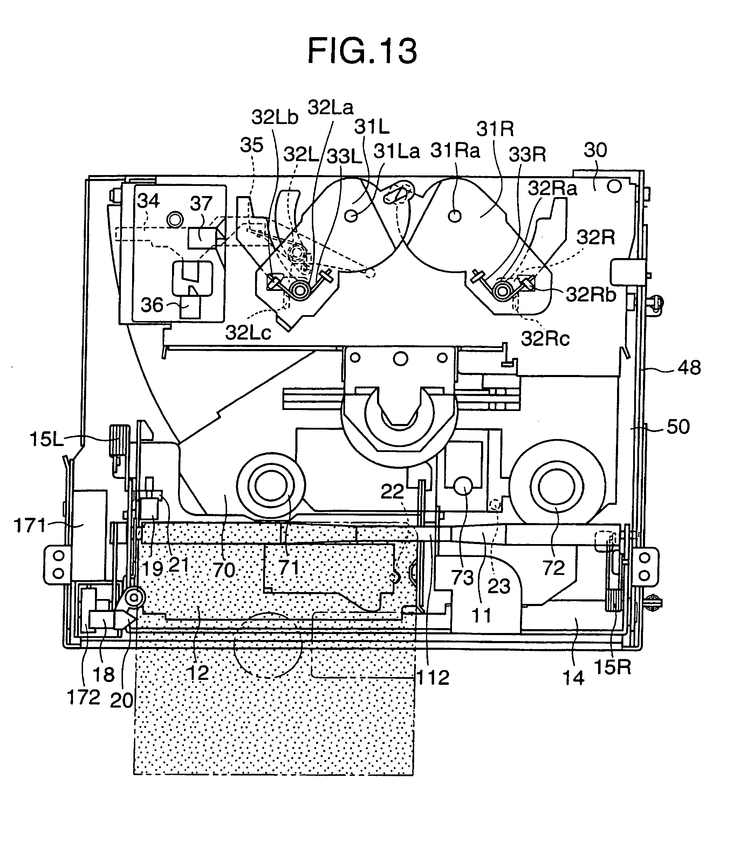

As shown in Fig. 10, on a subchassis 30 are mounted 12-cm CD sensing levers 31L and 31R, locking levers 32L and 32R and biasing springs 33L and 33R. A detailed explanation of these is not necessary for an understanding of the claimed invention. Fig. 13 is a top view of the disk drive apparatus when the user has inserted the MD to a position just below the roller 11.

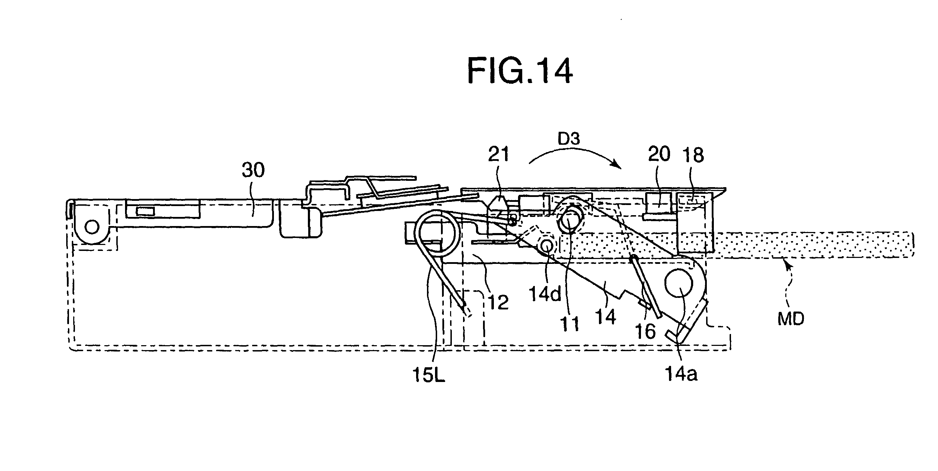

Fig. 14 is a side view of Fig. 13.

Fig. 15 is a partial expanded view of Fig. 14.

Referring to Figs. 14 and 15, the leading end portion of the MD pushes up the roller 11 so that the roller 11 can be in pressure contact with the MD. The shaft 111 of the roller 11 is slightly movable within the elongated hole 14b against the urging forces of the spring 16. Thus, the roller 11 presses the MD downwards and rotates in a direction shown by arrow D3 pulling the MD further into the disk drive apparatus.

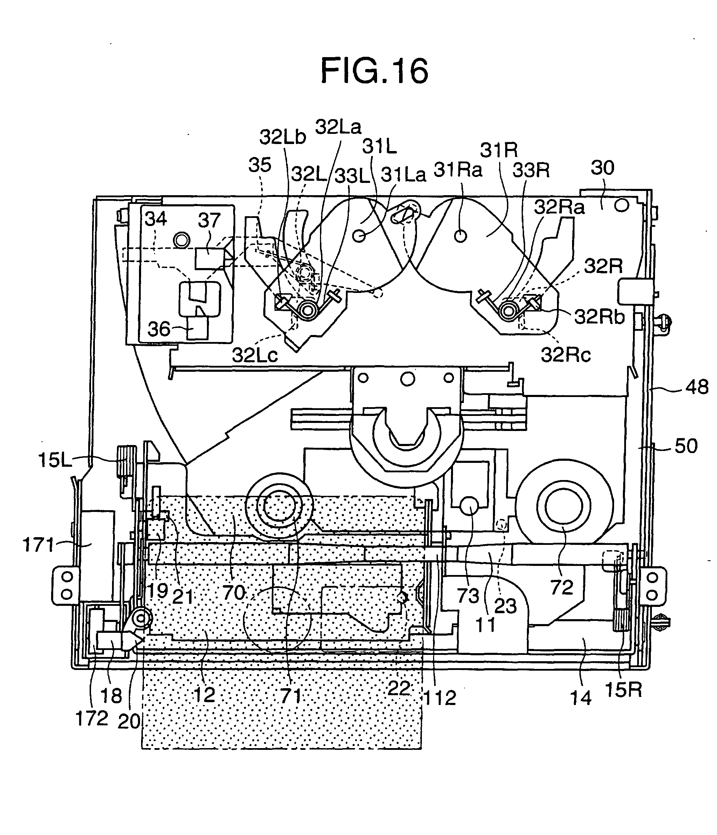

Fig. 16 is a top view of the disk drive apparatus when the MD has been advanced beyond a rear switch 19 from the position of Fig. 15.

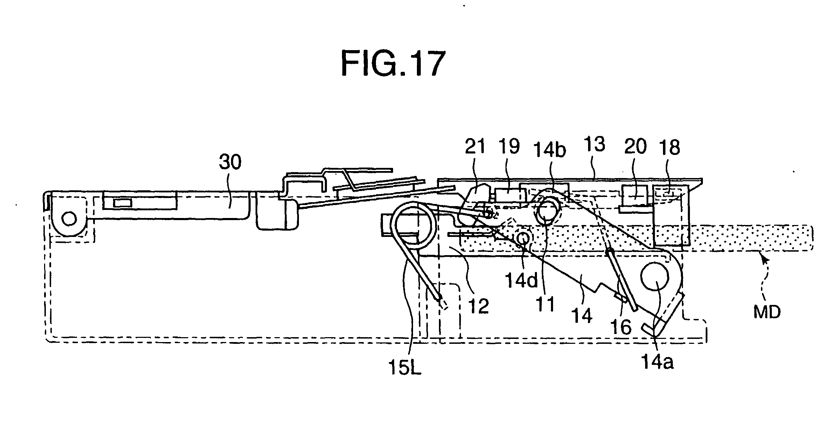

Fig. 17 is a side view of Fig. 16.

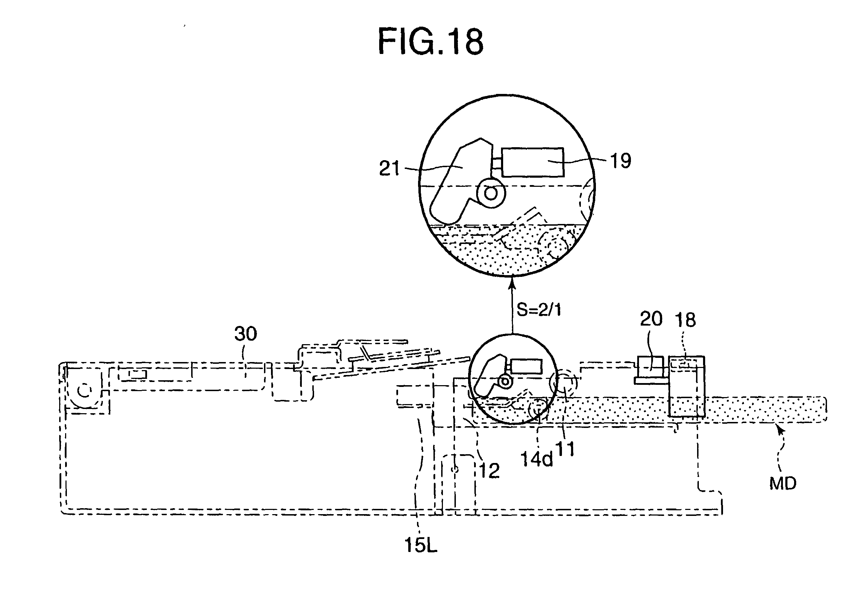

Fig. 18 illustrates a pertinent portion of Fig. 17.

Fig. 19 is a top view of the disk drive apparatus when the MD has reached a loading position of MD.

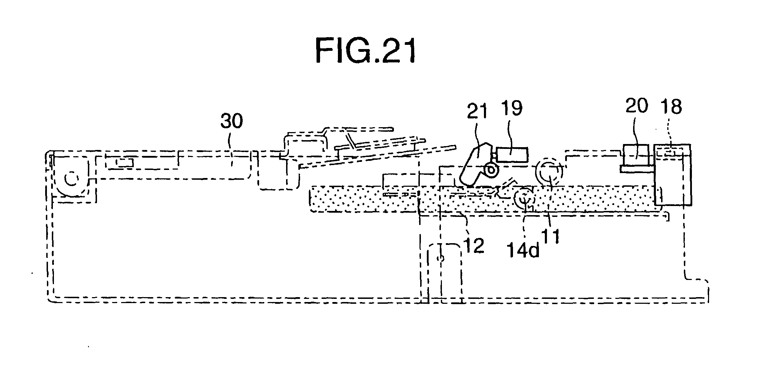

Fig. 21 is a side view of Fig. 19.

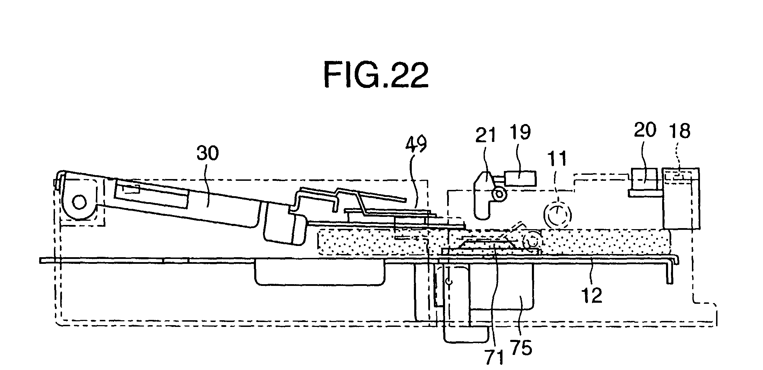

Fig. 22 is a side view of the disk drive apparatus when the MD is clamped.

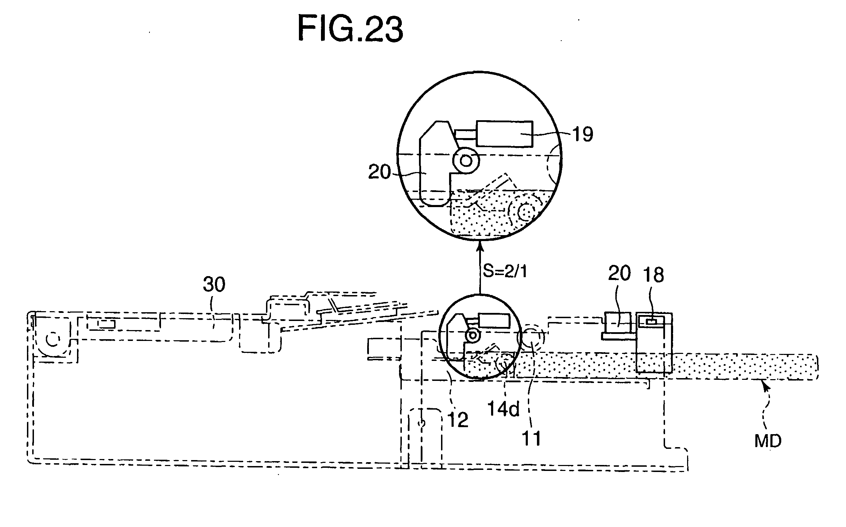

Fig. 23 is a side view of the disk drive apparatus when the MD has been pulled from the loading position of MD.

The rear switch 19 is located near the rearward end of the MD tray 12 (Figs. 10 and 11). When the MD is further pulled into the apparatus from the position of Fig. 15, the leading end of the MD pushes the lever 21 (Figs. 16-18) to shift the rear switch 19 from the OFF position to the ON position. Then, the MD is further advanced to the loading position shown in Fig. 21 where the clamping member 49 clamps the MD and the rear switch 19 becomes OFF as shown in Fig. 22.

When the clamping member 49 is raised upon the EJECTION command, the rear switch 19 again becomes ON and remains ON until the MD is moved from the loading position to a position (Fig. 23) where the user can pull the MD out of the apparatus.

As shown in Fig. 6, the clamping mechanism 40 includes a shutter 51 with a gate 511 that can allow or prevent the insertion of an MD or CD into the apparatus.

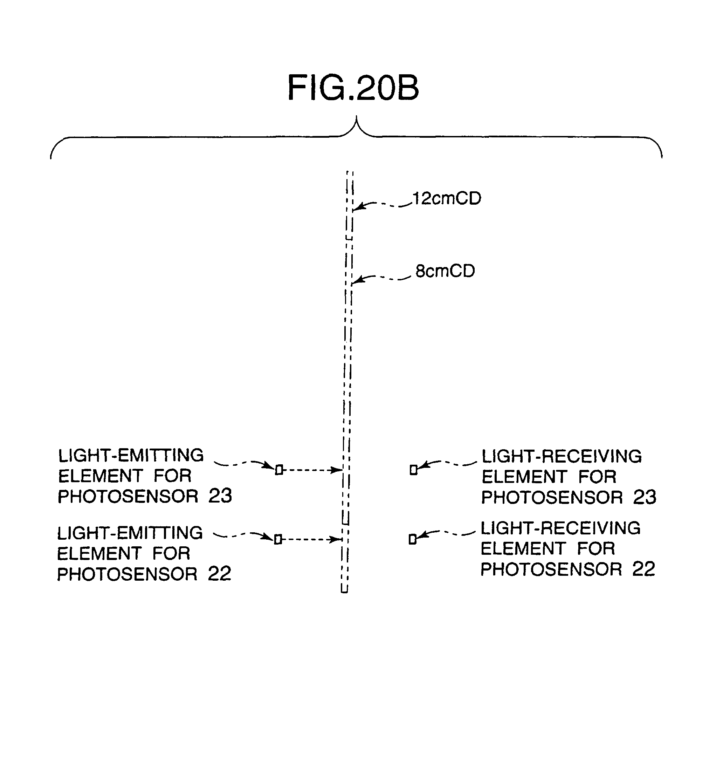

Referring again to Fig. 10, a front photosensor 22 is located upstream of the roller 11 with respect to an insertion direction of CD while a rear photosensor 23 is located downstream of the roller 11. The front and rear photosensors 22 and 23 each include a light-emitting element and a light-receiving element (Fig. 20B), disposed such that the light-emitting element is over the CD and the light-receiving element is under the CD. The front and rear photosensors 22 and 23 provide respective detection signals to the control circuit 2. In this specification, the photosensors 22 and 23 are said to be ON when the inserted CD enters the light path so that the light-receiving element fails to receive the light emitted from the light-emitting element. The photosensors 22 and 23 are said to be OFF when the inserted CD exits the light path so that the light-receiving element normally receives the light emitted from the light-emitting element. The rear photosensor 23 turns from the ON position to the OFF position when the CD is ejected to a position where the user can pull the CD out of the apparatus.

### The operation of the control circuit

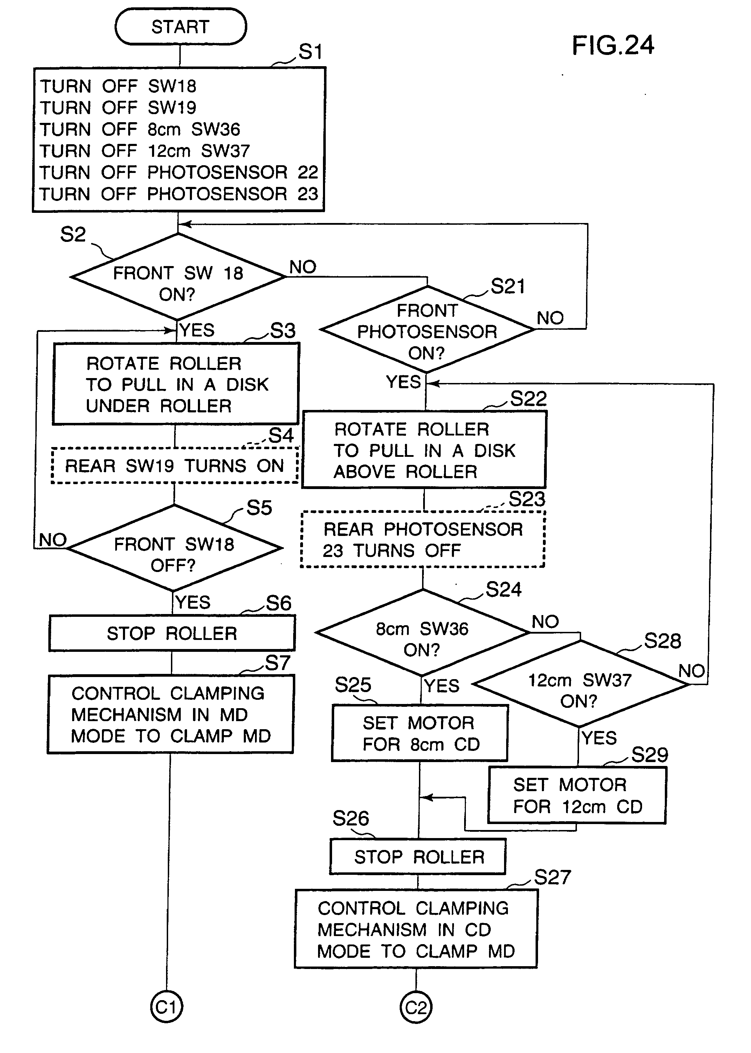

The operation of the control circuit will be described with reference to Figs. 24 and 25 and Figs. 6, 11, 14, 18, 22, and 23.

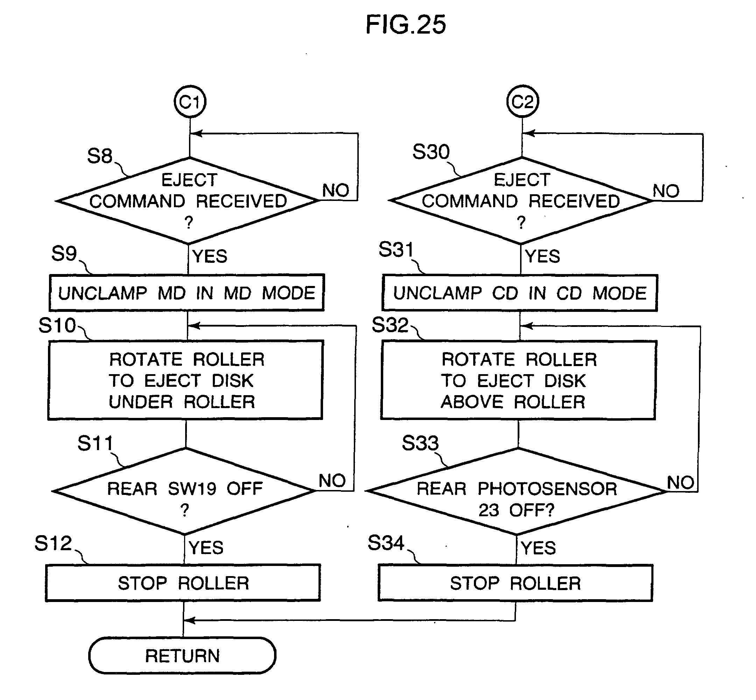

Figs. 24 and 25 are flowcharts illustrating the major operation of the control circuit 2.

Prior to the insertion of an MD or a CD, the front and rear switches 18 and 19 for detecting an MD, switches 36 and 37 for detecting a CD (8cm/12cm), and photosensors 22 and 23 for detecting the CD are all in the OFF position at step S1. The control circuit 2 monitors the outputs of the front switch 18 and the photosensor 22 to determine at step S2 whether the front switch 18 has turned ON and to determine at step S21 whether the photosensor 22 has become ON.

When the user inserts an MD into the MD tray 12 below the roller 11 (Fig. 11), the MD pushes the lever 20 to shift the front switch 18 to the ON position at step S2 (YES) and the front switch 18 becomes ON. Then, the control circuit 2 determines at step S3 that the apparatus should enter the MD mode, and controls the motor 171 to rotate in a direction (counterclockwise in Fig. 14) in which the MD positioned under the roller 11 is pulled in.

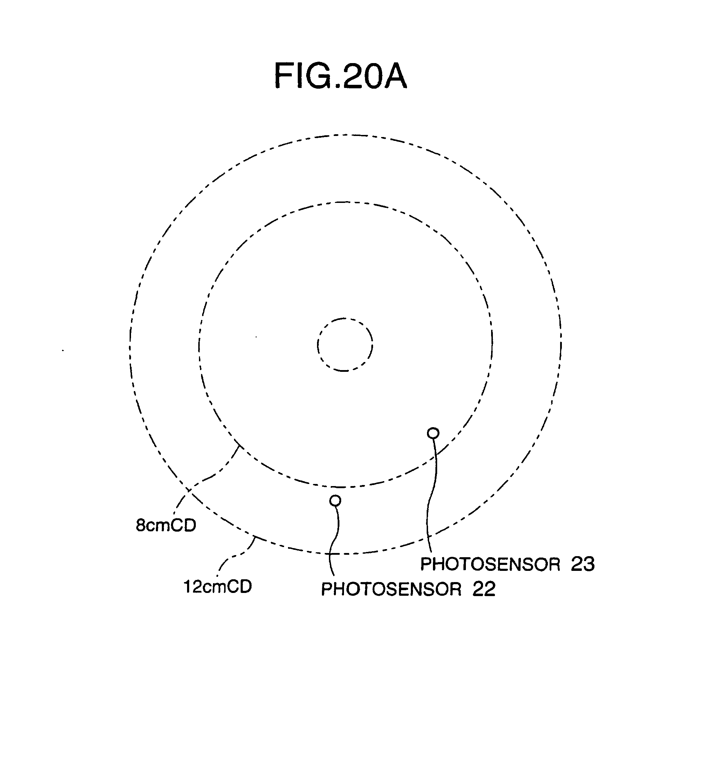

The gap between the roller 11 and the bottom of the MD tray 12 is slightly narrower than the thickness of the MD. The roller 11 is pivotally supported at the right longitudinal end thereof and substantially vertically displaceable at the left longitudinal end thereof against the urging force of a spring 16 (Fig. 7). Thus, when the user inserts an MD with the roller 11 rotating, the rotation of the roller 11 causes the roller 11 to ride on the MD (Figs. 15 and 20). Thus, the roller 11 is raised at the left longitudinal end thereof against the urging force of the spring 16. The spring 16 urges the rotating roller 11 to press down the MD with a sufficient force, thereby transporting the MD further into the apparatus.

When the MD has advanced into the apparatus by a predetermined distance (Fig. 18), the rear switch 19 becomes ON at step S4, the front switch 18 becomes OFF, and the rear switch 19 remains ON at step S5 (YES). If the answer at step S5 is YES, the control circuit 2 determines that the MD has been loaded completely, and then controls the roller 11 to stop at step S6. Then, the control circuit 2 controls the clamping mechanism 40 in the MD mode. As shown in Fig. 22, the rear switch 19 becomes OFF when the MD is clamped.

When the control circuit 2 receives an EJECT command at step S8, the control circuit 2 controls the clamping mechanism 40 in the MD mode to unclamp the MD at step S9. The clamping mechanism 40 returns to the condition shown in Fig. 21 and the rear switch 19 becomes ON again. At steps S10-S12, the control circuit 2 controls the roller 11 to rotate (Fig. 23) in a direction opposite to that at step S3 until the rear switch 19 becomes OFF.

When the user inserts a CD towards a gap between the roller 11 and a CD guide 13 (Fig. 6), the photosensor 22 becomes ON before the CD goes into contact with the roller 11 at step S21 (YES). Then, the control circuit 2 determines that the apparatus should enter the CD mode and controls the motor 171 to rotate in a direction (clockwise in Fig. 14) in which the CD located on the roller 11 is pulled in (S22)

The gap between the roller 11 and the CD guide 13 is slightly narrower than the thickness of the CD. The roller 11 is supported so that the roller 11 may be pivoted against the urging forces of the springs 15L and 15R. Therefore, when the user inserts the CD into the apparatus with the roller 11 rotating, the roller 11 is lowered against the urging forces of the springs 15L and 15R (Fig. 25). The springs 15L and 15R urge the rotating roller 11 to press the CD with a sufficient pressure, thereby pulling the CD further into the apparatus.

### Control operation when an 8-cm CD is to be loaded

When an 8-cm CD has advanced into the apparatus by a predetermined distance, the photosensor 23 becomes ON (S23). When the 8-cm CD further moves into the apparatus, the 8-cm CD pushes the CD detecting lever 34 (Fig. 10) against the urging force of the spring 35 so that the CD detecting lever 34 rotates counterclockwise. Thus, the 8-cm CD sensor switch 36 becomes ON at step S24 (YES) so that the control circuit 2 determines that an 8-cm CD has been inserted. Then, the control circuit 2 sets the gain of the motor 76 that drives a CD turntable to a value for 8-cm CD at step S25. The control circuit 2 also determines that the CD has been loaded, and causes the roller 11 to stop at step S26, and then proceeds to step S27.

### Control operation when a 12-cm CD is to be loaded

When a 12-cm CD has advanced into the apparatus by a predetermined distance, the 12-cm CD sensing lever 31L pushes the 12-cm CD sensor switch 37 to turn ON at step S28 (YES). Thus, the control circuit 2 determines that the inserted CD is a 12-cm CD, and sets the motor 76 for the CD turntable to a gain for 12-cm CD at step S29. The control circuit 2 also determines that the loading of the CD has been completed, and then stops the roller 11.

At step S27, when the loading of the CD has completed, the control circuit 2 controls the clamping mechanism 40 in the CD mode as mentioned previously. Then, the control circuit 2 causes the CD to be clamped.

Upon receiving an EJECTION command (S30), the control circuit 2 controls the clamping mechanism 40 in the CD mode in order to unclamp the CD (S31). Then, as shown in Fig 36, the control circuit 2 causes the roller 11 to rotate in a direction opposite to that at step S22 until the rear photosensor 23 becomes OFF (S32-S34)

## Claims

1. A disk drive apparatus into which a CD and an MD cartridge can selectively be loaded, comprising:
a roller (11), adapted to engage the CD and rotating to pull the CD into the disk drive apparatus when the CD is inserted into the apparatus;
in which the roller (11) is adapted to engage the MD cartridge and adapted to rotate to pull the MD cartridge into the disk drive apparatus when the MD cartridge is inserted into the apparatus through one of an upper space and a lower space, the upper space being above the roller (11) and the lower space being under the roller (11), and the CD being inserted into the apparatus through the other of the upper space and the lower spaces;
a first detector (18+20, 19+21) that detects the MD cartridge and generates a first detection signal when the MD cartridge is inserted into the apparatus;
a second detector (22, 23) that detects the CD and generates a second detection signal when the CD is inserted into the apparatus; and
a drive section (171, 172, 173) that drives said roller (11) in rotation in a first and a second opposite directions according respectively to the first detection signal and the second detection signal.

2. A disk drive apparatus according to Claim 1, wherein the CD is inserted above said roller (11) and the MD cartridge is inserted below said roller (11)

3. A disk drive apparatus according to claim 1 or claim 2, wherein said roller (11) has a first longitudinal end and a second longitudinal end, said first longitudinal end being supported such that the second longitudinal end is pivotal about the first longitudinal end;
wherein when the MD cartridge or CD is inserted into the disk drive apparatus, said roller (11) pivots such that said roller (11) is brought into pressure engagement with the MD cartridge or CD.

4. A disk drive apparatus according to Claim 3, wherein the roller (11) has a diameter larger nearer the second longitudinal end than at the middle of the roller.

## Patentansprüche

1. Plattenlaufwerkgerät, in das eine CD und eine MD-Kassette selektiv eingelegt werden können, umfassend:
eine Rolle (11), die zum Ergreifen der CD und Drehen ausgelegt ist, um die CD in das Plattenlaufwerkgerät zu ziehen, wenn die CD in das Gerät eingeführt wird;
wobei die Rolle (11) zum Ergreifen der MD-Kassette ausgelegt ist und zum Drehen ausgelegt ist, um die MD-Kassette in das Plattenlaufwerkgerät zu ziehen, wenn die MD-Kassette in das Gerät durch einen eines oberen Raums und eines unteren Raums eingeführt wird, wobei sich der obere Raum über der Rolle (11) befindet und der untere Raum sich unter der Rolle (11) befindet, und die CD in das Gerät durch den anderen des oberen Raums und des unteren Raums eingeführt wird;
einen ersten Detektor (18+20, 19+21), der die MD-Kassette erfasst und ein erstes Erfassungssignal erzeugt, wenn die MD-Kassette in das Gerät eingeführt wird;
einen zweiten Detektor (22, 23), der die CD erfasst und ein zweites Erfassungssignal erzeugt, wenn die CD in das Gerät eingeführt wird; und
einen Antriebsabschnitt (171, 172, 173), der die Rolle (11) in Drehung in einer ersten und einer zweiten, entgegengesetzten Richtung gemäß dem ersten Erfassungssignal und dem zweiten Erfassungssignal antreibt.

2. Plattenlaufwerkgerät nach Anspruch 1, bei dem die CD über der Rolle (11) eingeführt wird und die MD-Kassette unter der Rolle (11) eingeführt wird.

3. Plattenlaufwerkgerät nach Anspruch 1 oder Anspruch 2, bei dem die Rolle (11) ein erstes Längsende und ein zweites Längsende aufweist, wobei das erste Längsende so gehalten wird, dass das zweite Längsende um das erste Längsende schwenkbar ist;
wobei, wenn die MD-Kassette in das Plattenlaufwerkgerät eingeführt wird, die Rolle (11) derart schwenkt, dass die Rolle (11) in Druckeingriff mit der MD-Kassette oder CD gebracht wird.

4. Plattenlaufwerkgerät nach Anspruch 3, bei dem die Rolle (11) einen Durchmesser aufweist, der größer nahe dem zweiten Längsende als an der Mitte der Rolle ist.

## Revendications

1. Dispositif de lecteur de disque dans lequel un CD et une cartouche de mini-disque peuvent être chargés de manière sélective, comprenant :
un rouleau (11), adapté pour se mettre en prise avec le CD et tournant pour tirer le CD dans le dispositif de lecteur de disque lorsque le CD est inséré dans le dispositif ;
dans lequel le rouleau (11) est adapté pour se mettre en prise avec la cartouche de mini-disque et est adapté pour tourner pour tirer la cartouche de mini-disque dans le dispositif de lecteur de disque lorsque la cartouche de mini-disque est insérée dans le dispositif à travers l'un d'un espace supérieur et d'un espace inférieur, l'espace supérieur étant au-dessus du rouleau (11) et l'espace inférieur étant au-dessous du rouleau (11), et le CD étant inséré dans le dispositif à travers l'autre de l'espace supérieur et de l'espace inférieur ;
un premier détecteur (18 + 20, 19 + 21) qui détecte la cartouche de mini-disque et génère un premier signal de détection lorsque la cartouche de mini-disque est insérée dans le dispositif ;
un deuxième détecteur (22, 23) qui détecte le CD et génère un deuxième signal de détection lorsque le CD est inséré dans le dispositif ; et
une section d'entraînement (171, 172, 173) qui entraîne ledit rouleau (11) en rotation dans une première direction et une deuxième direction opposée, respectivement, conformément au premier signal de détection et au deuxième signal de détection.

2. Dispositif de lecteur de disque selon la revendication 1, dans lequel le CD est inséré au-dessus dudit rouleau (11) et la cartouche de mini-disque est insérée au-dessous dudit rouleau (11).

3. Dispositif de lecteur de disque selon la revendication 1 ou la revendication 2, dans lequel ledit rouleau (11) comporte une première extrémité longitudinale et une deuxième extrémité longitudinale, ladite première extrémité longitudinale étant supportée de sorte que la deuxième extrémité longitudinale pivote autour de la première extrémité longitudinale ;
dans lequel, lorsque la cartouche de mini-disque ou le CD est inséré dans le dispositif de lecteur de disque, le rouleau (11) pivote de sorte que ledit rouleau (11) soit amené en prise par pression avec la cartouche de mini-disque ou le CD.

4. Dispositif de lecteur de disque selon la revendication 3, dans lequel le rouleau (11) a un plus grand diamètre plus près de la deuxième extrémité longitudinale qu'au milieu du rouleau.
